# EUROPÄISCHE PATENTSCHRIFT

(11) **EP 1 419 937 B1**
(45) Veröffentlichungstag und Bekanntmachung des Hinweises auf die Patenterteilung: **26.10.2005**
(21) Anmeldenummer: 03025639.0
(22) Anmeldetag: 05.11.2003
(51) Int. Cl.: B60R 19/24

(54) **Stirnseitig an einem Motorträger anbringbarer Adapter**
Adapter mountable face to face to a motor carrier
Adaptateur applicable à un support moteur dans un plan axial

(30) Priorität: 13.11.2002 DE 10253101
(43) Veröffentlichungstag der Anmeldung: 19.05.2004
(73) Patentinhaber: Bayerische Motoren Werke Aktiengesellschaft, 80809 München (DE)
(72) Erfinder: Marks, Michael, 85375 Neufahrn (DE)

(56) Entgegenhaltungen:
- GB-A- 261 213
- US-A- 5 080 410
- PATENT ABSTRACTS OF JAPAN vol. 007, no. 044 (M-195), 22. Februar 1983 (1983-02-22) & JP 57 194135 A (NISSAN JIDOSHA KK), 29. November 1982 (1982-11-29)
- PATENT ABSTRACTS OF JAPAN vol. 011, no. 025 (M-556), 23. Januar 1987 (1987-01-23) & JP 61 196848 A (NISSAN MOTOR CO LTD), 1. September 1986 (1986-09-01)

## Beschreibung

Die Erfindung betrifft einen stirnseitig an einem Motorträger anbringbaren Adapter gemäß des Oberbegriffs des Patentanspruchs 1.

Aus der DE 196 33 910 A1 ist ein Adapter zur Aufnahme eines Stoßfängers eines Kraftfahrzeugs bekannt, dessen Flansch mit einem Motorträger über einen Teil der Höhe der Seitenwände des Motorträgers verschweißt ist.

Die US-A-5080410 zeigt einen Adapter, der die Merkmale der Oberbegriffs der Ansprüche 1 und 2 aufweist.

Aufgabe der Erfindung ist es, einen Adapter zu schaffen, der auf einfache Weise an einem Motorträger anbringbar ist, an den ein Frontend oder Stoßfänger befestigbar ist, und der kostengünstig herstellbar ist.

Diese Aufgabe wird durch die Merkmale des Patentanspruchs 1 gelöst.

Erfindungsgemäß ist der Adapter ein Blechumformteil. Blechumformteile lassen sich schnell und einfach herstellen und erfordern keine nennenswerte Nacharbeit. Zudem weisen Blechumformteile nur sehr kleine Toleranzen auf, sodass auch das Frontend oder der Stoßfänger mit entsprechend geringen Toleranzen montiert werden kann.

Der Adapter weist einen Flansch auf, mit dem der Adapter formschlüssig über den Motorträger schiebbar oder in den Motorträger einlegbar ist. Das Einlegen in den Motorträger setzt einen Motorträger in Schalenbauweise aus zwei Schalen voraus. Der Adapter wird dann üblicherweise in die erste Schale eingelegt, bevor die zweite Schalen gefügt wird. Er kann aber auch in den fertig zusammengebauten Motorträger in Schalenbauweise von vorne eingeschoben werden. Dieses Einschieben gilt auch als Einlegen.

Der Flansch des Adapters ist so umgeformt, dass die Wandstärke zum freien Ende hin, mit dem er über den Motorträger geschoben oder in den Motorträger eingelegt wird, abnimmt. So weist der Flansch am freien Ende beispielsweise nur mehr eine so geringe Wandstärke auf, dass das freie Ende mit dem Motorträger punktverschweißbar ist. Aufgrund der geringen Wandstärke können die Schweißpunkte relativ nah aneinander gesetzt werden, ohne dass es beim Schweißen zu einem Nebenschluss über den benachbarten Schweißpunkt kommt. Erst die geringe Wandstärke ermöglicht also ein Setzen von so vielen Schweißpunkten, dass die Anforderungen an die Festigkeit der Verbindung erfüllt werden können. Der Flansch ist günstigerweise so breit gestaltet, dass versetzt zueinander zwei umlaufende Reihen von Schweißpunkten gesetzt werden können. Aus Steifigkeitsgründen weist der Flansch aber nur am freien Endabschnitt diese dünnen Wandstärken auf. Der Verlauf der Wandstärke des Flanschs kann zum freien Endabschnitt hin kontinuierlich oder mit Sprüngen abnehmend gestaltet sein.

Bisher bekannte Adapter mussten mit dem Motorträger normalerweise schutzgasverschweißt werden. Dies ist ein deutlich aufwendigeres Schweißverfahren als Punktschweißen. Zudem wird beim Schutzgasschweißen meist die Verzinkung der Bauteile beschädigt, sodass eine erhöhte Korrosionsgefahr besteht. Der erfindungsgemäße Adapter kann punktgeschweißt werden, sodass all diese Nachteile vermieden werden können.

Günstigerweise weist der Adapter einen Kragen zur Anbringung des Frontends oder Stoßfängers auf. Der Kragen erstreckt sich bevorzugt in einer Ebene etwa senkrecht zur Fahrzeuglängsrichtung. Dadurch ist die Montage und Demontage eines Frontends oder Stoßfängers besonders einfach. Alternativ dazu kann der Kragen auch mehrere Durchzüge mit einem Gewinde aufweisen, die zur Verschraubung des Frontends oder Stoßfängers dienen.

Der Übergang zwischen Flansch und Kragen wird aus umformtechnischen Gründen bevorzugt mit einem Radius abgerundet sein. Beim Umformen dieses Übergangs wird idealerweise die Wandstärke zwischen Flansch und Kragen bewusst möglichst hoch gehalten oder sogar etwas erhöht, um die Steifigkeit des Adapters in diesem Bereich zu erhöhen.

Günstigerweise wird der Adapter aus einem höherfesten Stahlblech umgeformt. Dies erhöht die Festigkeit des Adapters deutlich gegenüber einem Adapter aus normalem Stahlblech, ohne dass das Gesamtgewicht des Adapters sich dadurch erhöht. Das Stahlblech hat vorteilhafterweise vor dem Umformen eine Streckgrenze von mindestens 220 N / mm². Derartige höherfeste Stahlbleche lassen sich gerade noch sinnvoll zum gewünschten Adapter umformen.

Während eines Umformvorgangs erhöht sich die Streckgrenze der umgeformten Bereiche. Idealerweise weist der Adapter in den in hohem Maße umgeformten Bereichen eine Streckgrenze von über 400 N / mm² auf.

Weitere vorteilhafte Ausgestaltungen sind Gegenstand von Unteransprüchen.

In der Zeichnung ist ein Ausführungsbeispiel der Erfindung dargestellt, anhand dessen die Erfindung im folgenden näher beschrieben wird. Die Figuren zeigen in schematischer Darstellungsweise:
- Fig. 1: eine perspektivische Ansicht eines Adapters,
- Fig. 2: eine Draufsicht auf den Adapter von Fig. 1 und
- Fig. 3: eine Seitenansicht des Adapters von Fig. 1.

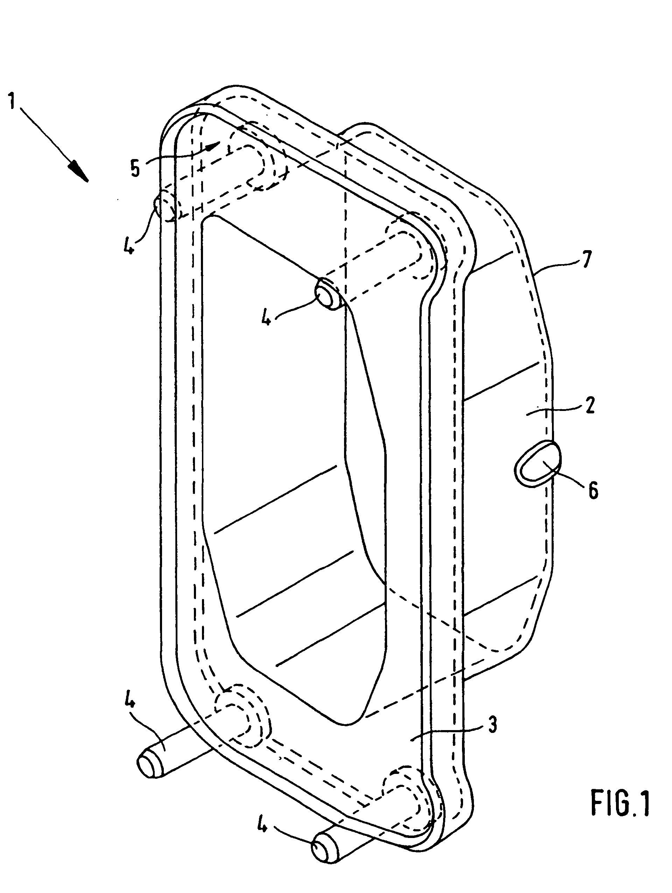

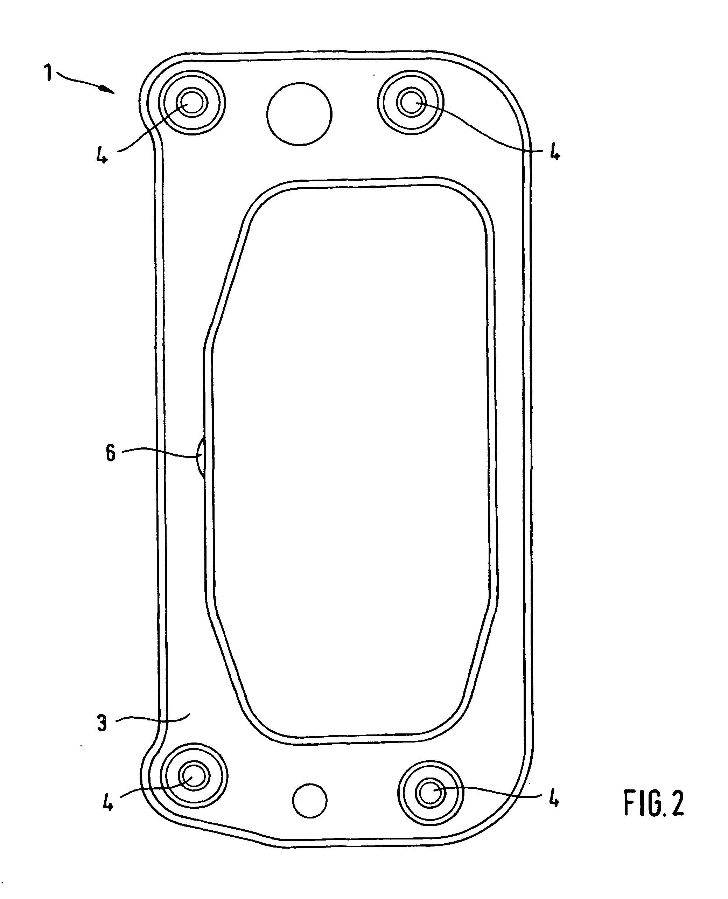

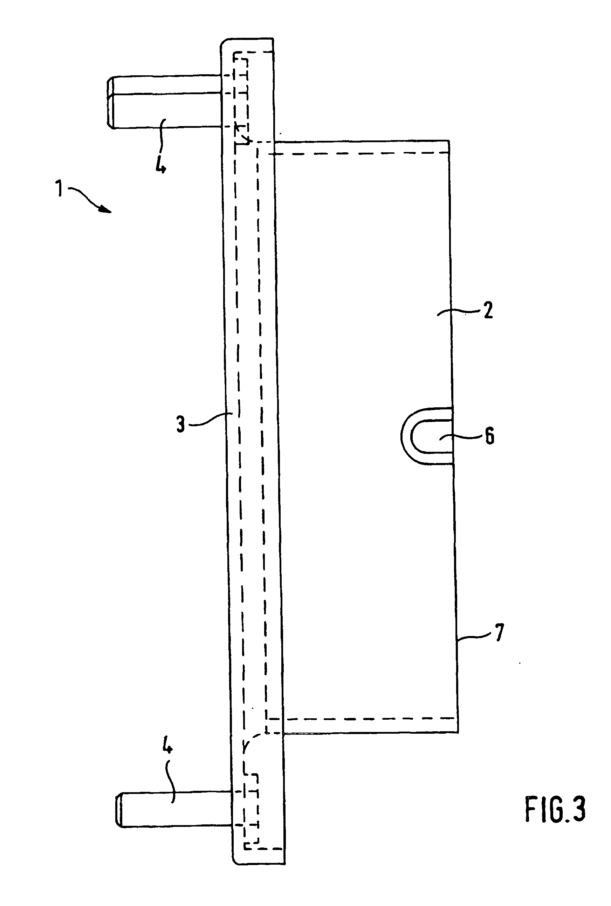

In den Figuren Fig. 1, Fig. 2 und Fig. 3 ist ein Adapter 1 gezeigt, der an einer Stirnseite eines nicht dargestellten Motorträgers anbringbar ist. Er besteht aus einem Flansch 2, mit dem er in den Motorträger eingelegt werden kann, und einem davon seitlich umlaufend abstehenden Kragen 3. Der äußere Rand des Kragens 3 ist nach hinten abgewinkelt. Am Kragen 3 umlaufend verteilt sind vier Stanzbolzen 4 angebracht. Die Stanzbolzen 4 dienen zusammen mit der Anlagefläche 5 des Kragens 3 zur Befestigung eines hier nicht abgebildeten Frontendmoduls. Der Flansch 2 weist an einer Stelle eine nach außen zum Motorträger ragende Nase 6 auf, mit der der Adapter 1 in einer entsprechenden Ausnehmung im Motorträger fixierbar ist. Die Nase 6 ist so ausgelegt, dass der Adapter 1 in einer definierten Stellung gehalten wird, nachdem er in den Motorträger während dessen Montage eingelegt wurde. Diese Vorfixierung ermöglicht es, den Adapter 1 erst am Rohbau des Fahrzeugs einzupunkten, wenn die Rohbaustruktur soweit entstanden ist, dass die gesamte Maßkette festgelegt ist. So können Toleranzen des Rohbaus gut ausgeglichen werden, bevor der Adapter 1 angeschweißt wird.

Der Adapter 1 ist ein Blechumformteil, das aus einer höherfesten, vorverzinkten Stahlplatine mit einer Streckgrenze von 260 N / mm² umgeformt wurde. Die Wandstärke des Flanschs 2 nimmt gezielt über eine Stufe zum freien Endabschnitt 7 hin ab, sodass dort nur mehr eine Wandstärke von 2,0 mm vorliegt. Diese dünne Wandstärke ermöglicht es, den Adapter 1 in diesem Bereich mit dem Motorträger im Punktschweißverfahren zu verschweißen, wobei die Schweißpunkte nur etwa 30 mm zueinander beabstandet sein können. Dabei werden zwei umlaufende Reihen von Schweißpunkten gesetzt, die zueinander versetzt sind. Der Flansch hat dazu eine Breite von etwa 40 mm, sodass die beiden Schweißpunktreihen den erforderlichen Platz haben.

Zum Kragen 3 hin nimmt die Wandstärke des Flanschs 2 auf etwa 3 mm zu. Auch der abgerundete Übergangsbereich zwischen Flansch 2 und Kragen 3 weist eine Wandstärke von 3 mm, bzw. sogar etwas mehr auf. Dazu wird beim Umformen versucht, eine Materialanhäufung im Übergangsbereich herbeizuführen. Dadurch ist die Wandstärke in den besonders hoch beanspruchten Bereichen relativ groß. Auch der nach hinten abgewinkelte Rand des Kragens 3 dient zur Versteifung des Adapters 1. Aus demselben Grund ist der abgewinkelte Rand des Kragens 3 zudem möglichst nahe an den Stanzbolzen 4 angeordnet. Die hohe Steifigkeit ist sowohl für einen Crash als auch zum Abschleppen notwendig.

## Patentansprüche

1. Stirnseitig an einem Motorträger anbringbarer Adapter (1), an dem ein Frontend oder Stoßfänger anbringbar ist, wobei der Adapter (1) ein Blechumformteil ist und einen Flansch (2) aufweist, mit dem der Adapter (1) formschlüssig über den Motorträger schiebbar oder in den Motorträger einlegbar ist, **dadurch gekennzeichnet, dass** der Flansch (2) an einer Stelle eine nach außen zum Motorträger ragende Nase (6) aufweist, mit der der Adapter (1) in einer entsprechenden Ausnehmung im Motorträger haltbar ist und dass der Adapter (1) an den Motorträger punkt verschweißbar ist.

2. Stirnseitig an einem Motorträger anbringbarer Adapter (1), an dem ein Frontend oder Stoßfänger anbringbar ist, wobei der Adapter (1) ein Blechumformteil ist und einen Flansch (2) aufweist, mit dem der Adapter (1) formschlüssig über den Motorträger schiebbar oder in den Motorträger einlegbar ist, **dadurch gekennzeichnet, dass** die Wandstärke des Flanschs (2) zum freien Ende (7) hin abnimmt und dass der Adapter (1) an der Motorträger punkt verschweißbar ist.

3. Adapter nach Anspruch 2, **dadurch gekennzeichnet, dass** der Flansch (2) am freien Ende (7) nur mehr etwa eine Wandstärke von 2,5 mm oder weniger aufweist.

4. Adapter nach einem der vorhergehenden Ansprüche, **dadurch gekennzeichnet, dass** der Flansch (2) eine Breite von mindestens 30 mm hat.

5. Adapter nach Anspruch 4, **dadurch gekennzeichnet, dass** der Flansch (2) eine Breite von mindestens 40 mm hat.

6. Adapter nach einem der vorhergehenden Ansprüche, **dadurch gekennzeichnet, dass** das freie Ende (7) des Flanschs (2) mit dem Motorträger durch Punktschweißen verbunden ist.

7. Adapter nach Anspruch 6, **dadurch gekennzeichnet, dass** das freie Ende des Flanschs (2) mit zwei umlaufenden Reihen von Schweißpunkten mit dem Motorträger verbunden ist.

8. Adapter nach Anspruch 6 oder 7, **dadurch gekennzeichnet, dass** die Schweißpunkte mit einem Abstand von weniger als 30 mm untereinander gesetzt sind.

9. Adapter nach einem der vorhergehenden Ansprüche, **dadurch gekennzeichnet, dass** der Adapter (1) einen Kragen (3) zur Anbringung des Frontends oder Stoßfängers aufweist.

10. Adapter nach Anspruch 9, **dadurch gekennzeichnet, dass** der Kragen (3) sich in einer Ebene etwa senkrecht zur Fahrzeuglängsrichtung erstreckt.

11. Adapter nach Anspruch 9 oder 10, **dadurch gekennzeichnet, dass** der äußere Rand des Kragens (3) abgewinkelt ist.

12. Adapter nach einem der Ansprüche 9 bis 11, **dadurch gekennzeichnet, dass** an dem Kragen (3) Befestigungsbolzen (4) angebracht sind.

13. Adapter nach einem der Ansprüche 9 bis 12, **dadurch gekennzeichnet, dass** der Kragen (3) Durchzüge mit eingepressten Gewinden aufweist.

14. Adapter nach einem der Ansprüche 9 bis 13, **dadurch gekennzeichnet, dass** der Übergang zwischen Flansch (2) und Kragen (3) mit einem Radius abgerundet ist.

15. Adapter nach einem der vorhergehenden Ansprüche, **dadurch gekennzeichnet, dass** das Stahlblech vor dem Umformen eine Streckgrenze von mindestens 220 N / mm² hat.

16. Adapter nach Anspruch 15, **dadurch gekennzeichnet, dass** der Adapter (1) in den in hohem Maße umgeformten Bereichen eine Streckgrenze von über 400 N / mm² aufweist.

## Claims

1. An adapter (1) for attaching to the front of an engine bearer, a front end or bumper being attachable to the adapter, wherein the adapter (1) is a worked sheet-metal part and has a flange (2) for positively sliding the adapter (1) over or inserting it into the engine bearer, **characterised in that** at one place the flange (2) has a lug (6) projecting outwards towards the engine bearer and for holding the adapter (1) in a suitable recess therein, and the adapter (1) is spot-weldable to the engine bearer.

2. An adapter (1) for attaching to the front of an engine bearer, a front end or bumper being attachable to the adapter, wherein the adapter (1) is a worked sheet-metal part and has a flange (2) for positively sliding the adapter over or inserting it into the engine bearer, **characterised in that** the wall thickness of the flange (2) decreases towards the free end (7) and the adapter (1) is spot-weldable to the engine bearer.

3. An adapter according to claim 2, **characterised in that** the free end (7) of the flange (2) has a wall thickness of only 2.5 mm or less.

4. An adapter according to any of the preceding claims, **characterised in that** the flange (2) has a width of at least 30 mm.

5. An adapter according to claim 4, **characterised in that** the flange (2) has a width of at least 40 mm.

6. An adapter according to any of the preceding claims, **characterised in that** the free end (7) of the flange (2) is connected to the engine bearer by spot welding.

7. An adapter according to claim 6, **characterised in that** the free end of the flange (2) is connected to the engine bearer by two peripheral lines of spot welds.

8. An adapter according to claim 6 or 7, **characterised in that** the spot welds are spaced at less than 30 mm from one another.

9. An adapter according to any of the preceding claims, **characterised in that** the adapter (1) has a collar (3) for attaching the front end or bumper.

10. An adapter according to claim 9, **characterised in that** the collar (3) extends in a plane approximately at right angles to the longitudinal direction of the vehicle.

11. An adapter according to claim 9 or 10, **characterised in that** the outer edge of the collar (3) is bent.

12. An adapter according to any of claims 9 to 11, **characterised in that** fastening bolts (4) are attached to the collar (3).

13. An adapter according to any of claims 9 to 12, **characterised in that** the collar (3) has passages with impressed screwthreads.

14. An adapter according to any of claims 9 to 13, **characterised in that** the transition between the flange (2) and collar (3) is rounded with a radius.

15. An adapter according to any of the preceding claims, **characterised in that** the steel sheet before being worked has a yield point of at least 220 N/mm².

16. An adapter according to claim 15, **characterised in that** in the highly worked regions it has a yield point of over 400 N/mm².

## Revendications

1. Adaptateur (1), applicable sur un support de moteur, pouvant recevoir un module d'extrémité frontale une extrémité avant ou un pare-chocs, cet adaptateur (1) étant une pièce de tôle réalisée par formage, avec un flanc (2) par lequel il peut être glissé par verrouillage par combinaison de formes dans le support de moteur ou intégré à celui-ci,
**caractérisé en ce que**
le flanc (2) présente en un point un ergot (6) en saillie vers l'extérieur en direction du support de moteur, et par lequel l'adaptateur (1) peut être maintenu dans un évidement correspondant du support de moteur, l'adaptateur (1) étant soudé par points sur le support de moteur.

2. Adaptateur (1) applicable sur un support de moteur, pouvant recevoir un module d'extrémité frontale extrémité avant ou un pare-choc, cet adaptateur étant une pièce de tôle réalisée par formage, avec un flanc (2) par lequel il peut être glissé par verrouillage par combinaison de formes dans le support de moteur ou intégré à celui-ci,
**caractérisé en ce que**
l'épaisseur de la paroi du flanc (2) diminue en direction de son extrémité libre (7), l'adaptateur (1) étant soudé par points au support de moteur.

3. Adaptateur selon la revendication 2,
**caractérisé en ce que**
le flanc (2) présente à son extrémité (7) une épaisseur de paroi qui ne dépasse pas environ 2,5 mm ou moins.

4. Adaptateur selon une des revendications précédentes,
**caractérisé en ce que**
le flanc (2) a une largeur d'au moins 30 mm.

5. Adaptateur selon la revendication 4,
**caractérisé en ce que**
le flanc (2) a une largeur d'au moins 40 mm.

6. Adaptateur selon une des revendications précédentes,
**caractérisé en ce que**
l'extrémité (7) libre du flanc (2) est reliée au support de moteur par des points de soudure.

7. Adaptateur selon la revendication 6,
**caractérisé en ce que**
l'extrémité libre (7) du flanc (2) est reliée au support de moteur par deux lignes périphériques de points de soudure.

8. Adaptateur selon la revendication 6 ou 7,
**caractérisé en ce que**
les points de soudure sont espacés les uns des autres de moins de 30 mm.

9. Adaptateur selon une des revendications précédentes,
**caractérisé en ce que**
l'adaptateur (1) présente un collet (3) pour le montage du module d'extrémité frontale ou du pare-choc.

10. Adaptateur selon la revendication 9,
**caractérisé en ce que**
le collet (3) se trouve dans un plan à peu près perpendiculaire à la direction longitudinale du véhicule.

11. Adaptateur selon la revendication 9 ou 10,
**caractérisé en ce que**
le bord externe du collet (3) est coudé.

12. Adaptateur selon une des revendications 9 à 11,
**caractérisé en ce que**
sur le collet (3) sont disposés des tenons de fixation (4).

13. Adaptateur selon une des revendications 9 à 12,
**caractérisé en ce que**
le collet (3) présente des passages avec des filetages estampés.

14. Adaptateur selon une des revendications 9 à 13,
**caractérisé en ce que**
la transition entre le flanc (2) et le collet (3) est arrondie.

15. Adaptateur selon une des revendications précédentes,
**caractérisé en ce que**
la tôle d'acier avant le formage présente une limite élastique d'au moins 220 N/mm².

16. Adaptateur selon la revendication 15,
**caractérisé en ce que**
l'adaptateur (1) dans les zones fortement déformées, présente une limite élastique dépassant 400 N/mm².
